# EUROPÄISCHE PATENTSCHRIFT

(11) **EP 0 451 489 B1**
(45) Veröffentlichungstag und Bekanntmachung des Hinweises auf die Patenterteilung: **03.11.1993**
(21) Anmeldenummer: 91103072.4
(22) Anmeldetag: 01.03.1991
(51) Int. Cl.: A21C 3/02

(54) **Wischvorrichtung zum Reinigen von Lichtschranken in Teigwalzmaschinen**
Wiper device for cleaning light barriers in dough rolling machines
Dispositif d'essuyage pour nettoyer des barrières lumières d'une machine à rouler la pâte

(30) Priorität: 27.04.1990 DE 4013517; 11.04.1990 DE 4011667
(43) Veröffentlichungstag der Anmeldung: 16.10.1991
(73) Patentinhaber: A. FRITSCH GMBH & CO. KG, D-97348 Markt Einersheim (DE)
(72) Erfinder: Bernhardt, Udo, W-8711 Markt Einersheim (DE)
(74) Vertreter: Matschkur, Götz, Lindner Patent- und Rechtsanwälte

## Beschreibung

Die Erfindung betrifft eine Wischvorrichtung zum Reinigen der Lichtschranke einer vor allem für Reversierbetrieb ausgelegten Teigwalzmaschine; diese weist wenigstens eine in der Höhe verstellbare Druckwalze auf, die den Durchgangsspalt für Teigmasse begrenzt. Mit dem Verstellhub der Druckwalze ist ein über die Linse der Lichtschranke reibender Wischer durch ein zugehöriges Betätigungsglied gekoppelt. Derartige Lichtschranken-Reinigungsmechanismen dienen zum Säubern der Lichtschrankenlinsen von Mehl- und Teigresten, um ein einwandfreies Funktionieren der Lichtschranke zu gewährleisten.

Bei einer bekannten Lichtschranken-Reinigungsvorrichtung (DE-GM 86 32 366) etwa der eingangs genannten Art erfolgt die Betätigung des Wischer-Arms, indem ein mit diesem verbundener Hebel gegen die Kraft einer Drehfeder durch Berührung mit der in der Höhe verstellten Teigwalzenachse verschwenkt wird. Die Hubbewegung der Teigwalze führt also direkt die Verschwenkung des Wischerarmes und mithin die Reinigung der Lichtschranke herbei. Dazu ist allerdings ein zusätzlicher bzw. verlängerter Verstellhub für die Teigwalze notwendig, was einen gesonderten Aufwand bei Linearführung und -antrieb erfordert.

Mithin stellt sich das der Erfindung zugrundeliegende Problem, bei einem Lichtschranken-Reinigungsmechanismus für Teigwalzmaschinen unter Vermeidung des vorgenannten Nachteils und Beibehaltung der grundsätzlichen Kopplung mit dem Teigwalzenhub den Wischerweg und -rhythmus weitgehend flexibel und insbesondere unabhängig von der Länge der Hubbewegung gestalten zu können. Zur Lösung wird bei einer Teigwalzmaschine mit den eingangs genannten Merkmalen erfindungsgemäß vorgeschlagen, ein an oder gegenüber der Teigwatzmaschine angelenktes Auslöseorgan vorzusehen, das aufgrund einer mit dem Druckwalzen-Verstellhub synchronisierten Schwenkbewegung auf das Betätigungsglied einwirkt. Der Wischvorgang wird also nicht - wie beim Stand der Technik - unmittelbar durch den Linearhub der Druckwalze, sondern mittelbar über ein Zwischenglied, nämlich das Auslöseorgan, durch dessen Dreh- bzw. Schwenkbewegung gesteuert. Der damit erzielte Vorteil besteht darin, daß die Länge und der zeitliche Ablauf der Wischerbewegungen durch den Radius beeinflußt werden können, den das Auslöseorgan zwischen seiner Anlenkstelle an der Teigwalzmaschine und seiner Angriffsstelle am Betätigungsglied besitzt. Vor allem kann durch Vergrößerung des Schwenkradius der Wischbewegungshub vergrößert werden, ohne daß dabei der Hub für die Teigdruckwalze erweitert werden müßte.

Zur Realisierung der Synchronisation der Schwenkbewegung des Auslöseorgans mit dem Hub der den Durchgangsspalt verstellenden Druckwalze besteht eine Konkretisierung des Erfindungsgedankens darin, daß das Auslöseorgan mit der Achse oder Antriebswelle gelenkig bzw. drehgelagert verbunden ist, so daß der Hub der Druckwalze zu einer Verschwenkung um den Anlenkpunkt des Auslöseorgans an der Teigwalzmaschine führt. Zur Schaffung einer Einwirkmöglichkeit des Auslöseorgans auf das Betätigungsglied liegt es im Rahmen der Erfindung, dort jeweils eine Raste sowie eine komplementäre Gegenraste (z. B. Einrastelement am Auslöseorgan) vorzusehen. In weiterer Konkretisierung dieses Gedankens weist das Auslöseorgan einen parallel zur Druckwalzenachse vorspringenden Auslösebolzen auf, der nach ausreichender Verschwenkung des Auslöseorgans an einem Betätigungsarm anliegt, der vom Betätigungsglied quer zum Bolzen vorspringt. Hierdurch sind Eingriffsmöglichkeiten zwischen Auslöseorgan und Betätigungsglied geschaffen, mittels welcher das Auslöseorgan auf das Betätigungsglied einwirken kann.

Damit beim Zustellen der Druckwalze, d. h. bei Verminderung des Teig-Durchgangsspaltes der Wischer nicht über die Lichtschranke fährt, sondern in Ruhestellung bleibt, bedarf es eines Aussetzens seiner Betätigung. Zu diesem Zweck ist nach einer Weiterbitdung der Erfindung vorgesehen, daß das Betätigungsglied zwei Teile aufweist, nämlich ein Wischerstellteil und ein Freilaufkoppelteil, die in einer Bewegungsrichtung voneinander unabhängig und losgelöst verstellt werden können, und in der entgegengesetzten Bewegungsrichtung relativ zueinander fest gekuppelt sind; das Wischerstellteil trägt den Wischer ortsfest, während das Freilaufkoppelteil mit dem verschwenkten Auslöseorgan in Eingriff bringbar ist. Das Auslöseorgan kann so beim Zustellen der den Durchgangsspalt verkleinernden Druckwalze zwar mit dem Freilaufkoppelteil des Betätigungsgliedes in Eingriff kommen, jedoch ist aufgrund der Freilaufeigenschaft in eine Bewegungsrichtung eine Betätigung des Wischerstellteils und damit ein Auslösen des Wischvorganges noch außer Kraft gesetzt. Erstwenn sich die Hubbewegung der Druckwalze umkehrt, infolgedessen das Auslöseorgan und das Freilaufkoppelteil in die entgegengesetzte Richtung verschwenkt bzw. bewegt werden, kommt eine bewegungsstarre Verbindung des letztgenannten Teils mit dem Wischerstellteil zustande, so daß der daran befestigte Wischer an der Lichtschranke vorbeibewegt wird.

Um nach Entfernen bzw. Ausrasten des Auslöseorgans vom Betätigungsglied seine beiden Freilaufkoppel- bzw. Wischerstellteile in ihre Ausgangslage oder Ruhestellung zurückbewegen zu können, ist mit Vorteil jedes genannte Teil mit einer Rückstellfeder in Wirkungsverbindung gesetzt, gegen deren Kraft sie durch das Auslöseorgan auslenkbar sind.

Der kompakten und raumsparenden Bauweise dient es, wenn nach einer anderen Ausbildung des gemäß Erfindung Wischerstell- und Freilaufkoppelteil umfassenden Betätigungsgliedes diese je durch Schwenkung um ein Scharniergelenk vom Auslöseorgan betätigbar sind; um die genannte Kupplung der beiden Teile miteinander zu realisieren, weist jedes eine Anlagefläche auf, die gegenseitig in Anschlag aufeinander und/oder Eingriff miteinander bringbar sind. Um den Einweg-Freilauf zum Ausschalten des Wischens beim Druckwalzen-Zustellen zu realisieren, ist es zweckmäßig, die gegenseitigen Anlageflächen in ihrer Winkellage so auszurichten, daß deren Eingriff und/oder Anschlag nur in einem einzigen - nicht dem Walzen-Zustellen entsprechenden - Drehsinn erzielt wird.

Bei der Ausführung des Betätigungsgliedes mit Wischerstellteil und Freilaufkoppelteil ergibt sich das Problem, daß in einem Dreh- bzw. Schwenksinn das Freilaufkoppelteil alleine - unabhängig vom anderen Teil - bewegt werden soll. Zur Lösung ist in Weiterbildung der Erfindung vorgesehen, daß das Wischerstellteil am Maschinenchassis und das Freilaufkoppelteil am Wischerstellteil angelenkt ist. Hierdurch kann sich einerseits das Freilaufkoppelteil relativ zum Wischerstellteil verschwenken und dabei ein Einwirken des verschwenkten Auslöseorgans zur Betätigung des Wischers unterbinden; andererseits - bei Kupplung der beiden Teile miteinander - können diese so um eine gemeinsame Scharnierachse - realisiert durch die Anlenkstelle des Wischerstellteils am Maschinenchassis - vom Auslöseorgan gekippt werden. Bei dieser Ausbildung ergibt sich noch die vorteilhafte Möglichkeit, das Wischerstellteil und, wenn vorgesehen, dessen Rückstellfeder gegen ein Anschlagelement am Maschinenchassis abzustützen, während das Freilaufkoppelteil und, wenn vorgesehen, dessen Rückstellfeder gegenüber dem Wischerstellteil, insbesondere gegen dessen Anschlagfläche abgestützt sein kann. Hierdurch entfällt die Notwendigkeit, für den Freilaufkoppelteil gesonderte Widerhalte am Maschinenchassis anbringen zu müssen.

Weitere Merkmale, Einzelheiten und Vorteile ergeben sich aus der nachfolgenden Beschreibung eines bevorzugten Ausführungsbeispiels der Erfindung sowie anhand der Zeichnung. Darin zeigen:
Fig. 1 eine abgebrochen dargestellte Ansicht auf den die Druckwalzen umfassenden Teil einer Teigwalzmaschine mit erfindungsgemäßer Wischvorrichtung,
Fig. 2 einen Schnitt gemäß der Linie 11-11 in Fig. 1,
Fig. 3 eine Fig. 1 entsprechende Ansicht mit abgewandelter Stellung der Wischvorrichtung, und
Fig. 4 eine Fig. 1 entsprechende Ansicht mit einer weiteren Stellung der Wischvorrichtung.

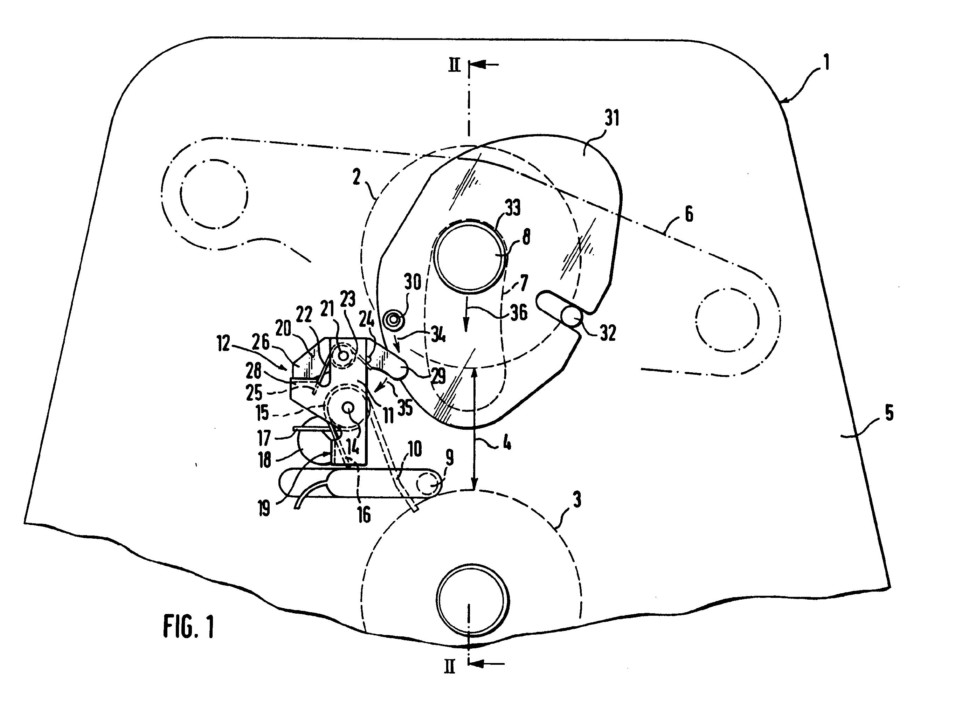

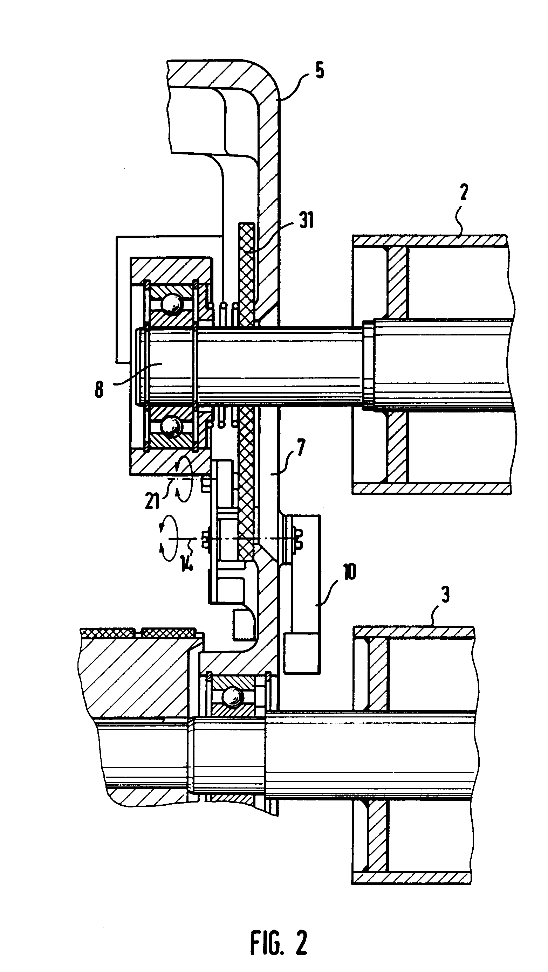

Bei dem in Fig. 1 und 2 dargestellten Teil der Teigwalzmaschine 1 begrenzen zwei gegenüberliegende Walzen, nämlich eine obere Druckwalze 2 und eine untere Druckwalze 3 einen Teig-Durchgangsspalt4. Die beiden Druckwalzen 2, 3 sind in der Ansicht durch das Maschinenchassis 5 verdeckt und deshalb gestrichelt angedeutet. Die obere Druckwalze 2 ist durch eine (strichpunktiertangedeutete) Hubeinrichtung 6 längs eines Langlochs 7 zur Verengung oder Verbreiterung des Durchgangsspalts 4 höhenverstellbar, und zu diesem Zweck ist die Walzenantriebsachse 8 in dem Langloch 7 längsverschiebbar aufgenommen. Der Durchgangsspalt 4 wird von einer am Chassis 5 angebrachten Lichtschranke 9 abgetastet.

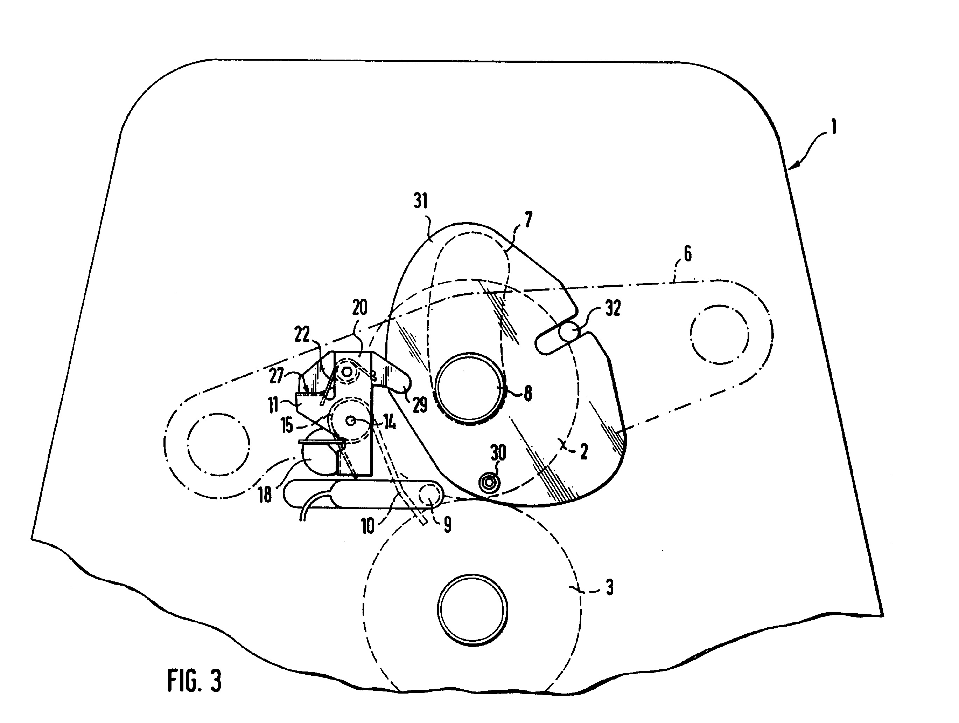

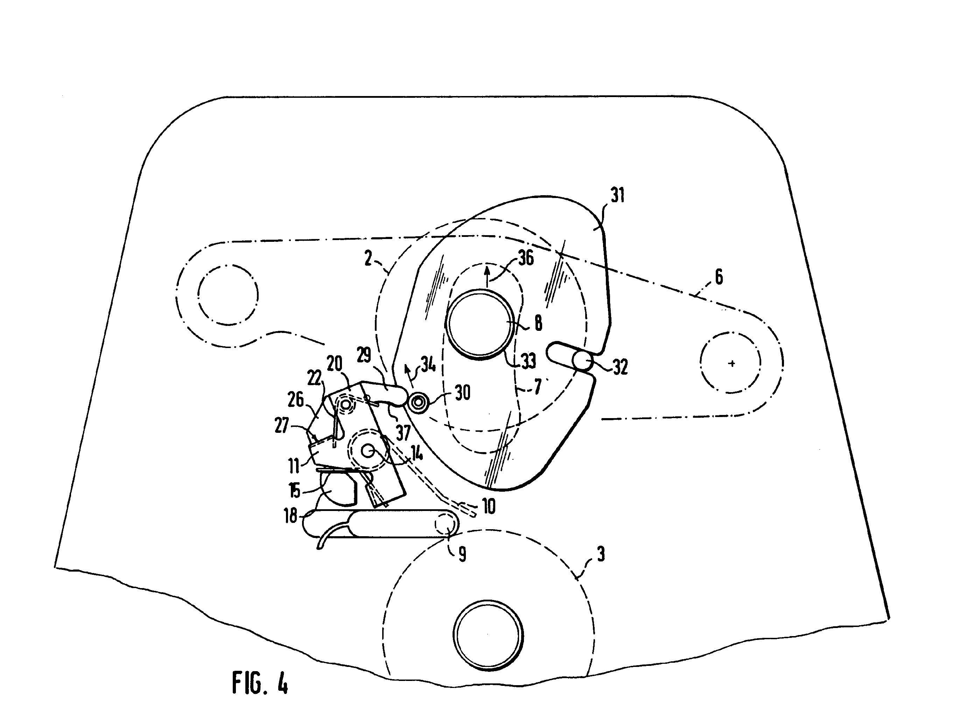

Zu deren Reinigung dient ein im Zuge einer Schwenkbewegung über die Lichtschranken-Linsenfläche fahrender Wischer 10 (vgl. auch Fig. 3, 4) der am Wischerstellteil 11 eines Betätigungsglieds 12 befestigt ist. Das Wischerstellteil 11 ist am Maschinenchassis 5 um die (senkrecht zur Zeichenebene verlaufende) Wischerstellachse 14 gegen die Kraft einer Wischerrückstellfeder 15 schwenkbar angelenkt. Die Wischerrückstellfeder 15 ist als Drehfeder ausgeführt und mit ihrem einen Ende 16 gegen den Wischerstellteil 11 und mit ihrem anderen Ende 17 gegen ein am Chassis 5 seitlich befestigtes Anschlagelement 18 abgestützt. Hierdurch wird das Wischerstellteil 11 mit einer dem Anschlagelement 18 zugewandten (senkrecht zur Zeichenebene verlaufenden) Schulterfläche 19 in eine am Anschlagelement 18 anliegende Ausgangsposition gedrückt. Am oberen Bereich des Wischerstellteils 11 ist ein Freilaufkoppelteil 20 um eine (senkrecht zur Zeichenebene verlaufende) Freilaufachse 21 gegen die Kraft einer Koppelrückstellfeder 22 schwenkbar angelenkt. Hierzu ist das eine Ende 23 der Koppelrückstellfeder 22 gegen einen (senkrecht zur Zeichenebene) vom Freilaufkoppelteil 20 vorspringenden Zapfen 24, und ihr anderes Ende 25 gegen eine Kante am Wischerstellteil 11 abgestützt. Mithin übt die Koppelrückstellfeder 22 auf das Freilaufkoppelteil 20 - analog wie die Wischerrückstellfeder 15 auf das Wischerstellteil 11 - ein Drehmoment aus, aufgrund dessen das Freilaufkoppelteil 20 in eine Ausgangsposition zurückgestellt wird, in der sein Anschlagvorsprung 26 auf die (senkrecht zur Zeichenebene verlaufende) Anlagefläche 27 einer Auflageschulter 28 des Wischerstellteils 11 aufliegt.

Die Wischerstell- und Freilaufkoppelteile 11, 20 bilden beide zusammen für den Wischer 10 ein Betätigungsglied 12, das über einen vom Freilaufkoppelteil 20 in Richtung zum Durchgangsspalt 4 vorspringenden Betätigungsarm 29 mit einem Auslösebolzen 30 bei entsprechender Stellung (vgl. Fig. 4) zusammenwirkt. Der Auslösebolzen 30 ist Bestandteil eines als Kunststoff-Dichtscheibe ausgebildeten Auslöseorgans 31 und springt von dessen Seite etwa parallel zur Walzenachse 8 quer zum Betätigungsarm 29 vor. Das Auslöseorgan 31 ist einerseits am Chassis 5 um eine (senkrecht zur Zeichenebene verlaufende) Schwenkachse 32 angelenkt und andererseits von der Walzenachse 8 drehgelagert durchsetzt. Im Ausführungsbeispiel ist die Drehlagerung als Gleitlagerung realisiert, indem für die Dichtscheibe ein Gleitwerkstoff verwendet ist.

Wird die obere Druckwalze 2 aus der in Fig. 1 ersichtlichen Stellung von der Hubeinrichtung den Durchgangsspalt 4 verengend nach unten bewegt, wird das Auslöseorgan 31 um seine Schwenkachse 32 mitverschwenkt (vgl. Schwenkrichtung 34 in Fig. 1), so daß der Auslösebolzen 30 dem mit dem Freilaufkoppelteil fest verbundenen Betätigungsarm 29 eine Kippbewegung 35 im Uhrzeigersinn um die Freilaufachse 21 gegen die Kraft der Koppelrückstellfeder22 erteilt. Dabei löst sich der Anschlagvorsprung 26 des Freilaufkoppelteils 20 von der Anlagefläche 27 des Wischerstellteils 11 (nicht dargestellt), das dabei nicht bewegt wird.

Gemäß Fig. 3 ist die obere Druckwalze 2 - die anhand von Fig. 1 erläuterte Bewegung fortsetzend - in eine Position für eine minimale Weite des Durchgangsspaltes 4 verstellt, wobei der Auslösebolzen 30 des Auslöseorgans 31 am Betätigungsarm 29 vorbeibewegt, und der Betätigungsarm 29 von der Koppelrückstellfeder 22 in die Ausgangs- bzw. Anschlagstellung an der Anlagefläche 27 zurückgestellt worden sind. Gemäß Fig. 4 hat die Hubeinrichtung 6 die lineare Verstellbewegung 36 für die obere Druckwalze 2 längs des Langlochs 7 und mithin die Schwenkrichtung 34 für den Auslösebolzen 30 umgekehrt. Nachdem der Auslösebolzen 30 den Betätigungsarm 29 gegen dessen Unterseite 37 drückend entgegen dem Uhrzeigersinn verschwenkt hat, gleitet er im Zuge seiner Kreisbahn am Betätigungsarm 29 vorbei. Durch das Verschwenken des Betätigungsarms 29 bzw. des Freilaufkoppelteils 20, was aufgrund des Anliegens des Anschlagvorsprungs 26 auf der Anlagefläche 27 des Wischerstellteils um die Wischerstellachse 14 erfolgt, ist das Wischerstellteil 11 mit daran angebrachtem Wischer 10 gleichsinnig - an der Lichtschranke 9 vorbei - mitbewegt worden. Durch diesen Mechanismus ist gewährleistet, daß die Reinigung der Lichtschranke 9 ausschließlich bei einer nach oben gerichteten Hubbewegung der oberen Druckwalze 2 durchgeführt wird. Nach beendetem Untergreifen der Unterseite 37 des Betätigungsarms 29 durch den Auslösebolzen 30 gleitet dieser - wie in Fig. 4 gezeigt - am Betätigungsarm 29 vorbei, so daß hernach Wischerstellteil 11 zusammen mit Freilaufkoppelteil 20 um die Wischerstellachse 14 im Uhrzeigersinn von der Wischerrückstellfeder 15 in ihre Ausgangsposition zurückbewegt werden können.

Es liegt im Rahmen der Erfindung, wenn beidseits des Teig-Durchgangsspaltes 4 bzw. einer entsprechenden Mittelachse je eine beschriebene Wischvorrichtung vorzugsweise symmetrisch angeordnet sind.

## Patentansprüche

1. Wischvorrichtung zum Reinigen der Lichtschranke (9) einer Teigwalzmaschine (1), insbesondere für Reversierbetrieb, die eine den Teig-Durchgangsspalt (4) verstellbar begrenzende Druckwalze (2) aufweist, mit deren Spalt-Verstellhub (36) ein über die Lichtschrankenoberfläche fahrender Wischer (10) durch ein Betätigungsglied (12) gekoppelt ist, gekennzeichnet durch ein an oder gegenüber der Teigwalzmaschine (1) angelenktes Auslöseorgan (31), das aufgrund einer mit dem Druckwalzen-Verstellhub (36) synchronisierten Schwenkbewegungen (34) auf das Betätigungsglied (12) einwirkt.

2. Wischer nach Anspruch 1, dadurch gekennzeichnet, daß das Auslöseorgan (31) zu seiner Verschwenkung (34) mit der Druckwalzenachse (8) drehgelagert verbunden ist.

3. Wischer nach Anspruch 1 oder 2, dadurch gekennzeichnet, daß das Betätigungsglied (12) als Raste (37) ausgeführt ist, der ein komplementäres Einrastelement (30) am Auslöseorgan (31) zugeordnet ist.

4. Wischer nach einem der vorherigen Ansprüche, dadurch gekennzeichnet, daß das Auslöseorgan (31) einen parallel zur Druckwalzenachse (8) vorspringenden Auslösebolzen (30) zur Anlage an einen dazu quer vorspringenden Betätigungsarm (29) des Betätigungsglieds (12) aufweist.

5. Wischer nach einem der vorherigen Ansprüche, dadurch gekennzeichnet, daß das Betätigungsglied (12) zwei in einer Bewegungsrichtung zueinander freilaufend und in der entgegengesetzten Bewegungsrichtung miteinander starr gekuppelte Wischerstell- bzw. Freilaufkoppelteile (11, 20) umfaßt, die jeweils den Wischer (10) ortsfest tragen bzw. mit dem verschwenkten Auslöseorgan (31) koppelbar sind.

6. Wischer nach Anspruch 5, dadurch gekennzeichnet, daß jedes Teil (11, 20) aus seiner Ausgangslage durch das Auslöseorgan (31) gegen die Kraft einer Rückstellfeder (15, 22) auslenkbar ist.

7. Wischer nach Anspruch 5 oder 6, dadurch gekennzeichnet, daß das Wischerstell- und das Freilaufkoppelteil (11, 20) je vom Auslöseorgan (31) um ein Gelenk (14, 21) schwenkbar ausgebildet sind und gegenseitig in Anschlag und/oder Eingriff bringbare Anlageflächen (26, 27) aufweisen.

8. Wischer nach Anspruch 7, gekennzeichnet durch derart gegenseitig ausgerichtete Anlageflächen (26, 27), daß deren Eingriff und/oder Anschlag nur in einem einzigen Drehsinn erzielt wird.

9. Wischer nach Anspruch 7 oder 8, dadurch gekennzeichnet, daß das Wischerstellteil (11) am Maschinenchassis (5), und das Freilaufkoppelteil (20) am Wischerstellteil (11) angelenkt ist.

10. Wischer nach Anspruch 9, dadurch gekennzeichnet, daß das Wischerstellteil (11) und gegebenenfalls dessen Rückstellfeder (15) gegenüber dem Maschinenchassis (5), und/oder das Freilaufkoppelteil (20) und gegebenenfalls dessen Rückstellfeder (22) gegenüber dem Wischerstellteil (11) abgestützt ist.

## Claims

1. Wiping device for cleaning the light barrier (9) of a dough-kneading machine (1), in particular for reverse operation, having a pressure roller (2) adjustably defining the gap (4) for the dough to pass through, and wherein a wiper (10) passing over the light barrier surface is engaged during the gap-adjusting stroke (36) of said roller by an actuating member (12), characterised by a release mechanism (31) pivotably attached to or relative to the dough-kneading machine (1) and acting on the actuating member (12) due to a pivoting motion (34) synchronised with the pressure-roller adjustment stroke (36).

2. Wiper according to claim 1, characterised in that the release mechanism (31) is rotatably connected to the pressure roller axis (8) in order to pivot (34).

3. Wiper according to claim 1 or 2, characterised in that the actuating member (12) takes the form of a catch (37), which is associated with a complementary engaging element (30) on the release mechanism (31).

4. Wiper according to one of the preceding claims, characterised in that the release mechanism (31) has a release pin (30) projecting parallel to the pressure roller axis (8) in order to bear on an actuating arm (29) of the actuating member, projecting transverse to said pin.

5. Wiper according to one of the preceding claims, characterised in that the actuating member (12) comprises two wiper setting or free-running coupling parts (11, 20), which move freely relative to one another in one direction of motion and are rigidly coupled together in the other direction of motion, and each of which carries the wiper (10) in a fixed manner or is capable of being coupled to the pivoted release mechanism (31).

6. Wiper according to claim 5, characterised in that each part (11, 20) is pivotable out of its starting position by the release mechanism (31) against the force of a restoring spring (15, 22).

7. Wiper according to claim 5 or 6, characterised in that the wiper-setting or free-running coupling parts (11, 20) are each formed by the respective release mechanism (31) so as to pivot about a hinge (14, 21) and have contact faces (26, 27) capable of being brought into mutual abutment and/or engagement.

8. Wiper according to claim 7, characterised by contact faces (26, 27) which are so oriented relative to one another that their engagement and/or abutment is effected only in one direction of rotation.

9. Wiper according to claim 7 or 8, characterised in that the wiper setting part (11) is pivotably attached to the machine chassis (5), and the free-running coupling part (20) to the wiper setting part (11).

10. Wiper according to claim 9, characterised in that the wiper setting part (11) and optionally its restoring spring (15) are supported relative to the machine chassis (5), and/or the free-running coupling part (20) and optionally its restoring spring (22) are supported relative to the wiper setting part (11).

## Revendications

1. Dispositif d'essuyage pour nettoyer la barrière photoélectrique (9) d'une machine (1) à rouler la pâte, notamment conçue pour un fonctionnement en mode réversible et munie d'un cylindre de pression (2) délimitant, avec faculté de réglage, l'interstice (4) de passage de la pâte, cylindre avec la course d'ajustement (36) duquel est accouplé, par l'intermédiaire d'un organe d'actionnement (12), un essuyeur (10) se déplaçant au-dessus de la surface de la barrière photoélectrique, caractérisé par un organe de déclenchement (31) qui est articulé sur la machine (1) à rouler la pâte ou par rapport à cette dernière, et qui agit sur l'organe d'actionnement (12) suite à un mouvement de pivotement (34) synchronisé avec la course d'ajustement (36) du cylindre de pression.

2. Essuyeur selon la revendication 1, caractérisé par le fait que l'organe de déclenchement (31) est relié à l'axe (8) du cylindre de pression avec montage rotatif, en vue de son pivotement (34).

3. Essuyeur selon la revendication 1 ou 2, caractérisé par le fait que l'organe d'actionnement (12) est réalisé sous la forme d'un cran d'arrêt (37) auquel est associé, sur l'organe de déclenchement (31), un élément d'encrantage complémentaire (30).

4. Essuyeur selon l'une des revendications précédentes, caractérisé par le fait que l'organe de déclenchement (31) présente un tenon de déclenchement (30) saillant parallèlement à l'axe (8) du cylindre de pression, et conçu pour venir s'appliquer contre un bras d'actionnement (29) de l'organe d'actionnement (12), qui dépasse dans le sens transversal par rapport audit tenon.

5. Essuyeur selon l'une des revendications précédentes, caractérisé par le fait que l'organe d'actionnement (12) comprend deux pièces respectives (11,20) de réglage de l'essuyeur et d'accouplement à course libre, qui s'étendent librement l'une par rapport à l'autre dans une direction de mouvement et sont accouplées rigidement l'une à l'autre dans la direction de mouvement opposée, pièces respectives dont l'une supporte de manière fixe l'essuyeur (10), et dont l'autre peut être accouplée à l'organe de déclenchement (31) ayant pivoté.

6. Essuyeur selon la revendication 5, caractérisé par le fait que chaque pièce (11, 20) peut être animée d'une excursion à l'écart de sa position de départ, sous l'action de l'organe de déclenchement (31), en s'opposant à la force d'un ressort de rappel (15, 22).

7. Essuyeur selon la revendication 5 ou 6, caractérisé par le fait que les pièces respectives (11,20) de réglage de l'essuyeur et d'accouplement à course libre sont réalisées pour être animées chacune d'un pivotement autour d'une articulation (14, 21), par l'organe de déclenchement (31), et présentent des surfaces de contact (26, 27) pouvant être mises mutuellement en butée et/ou en prise.

8. Essuyeur selon la revendication 7, caractérisé par des surfaces de contact (26,27) réciproquement orientées de telle sorte que leur venue en prise et/ou en butée soit obtenue dans un seul et unique sens de rotation.

9. Essuyeur selon la revendication 7 ou 8, caractérisé par le fait que la pièce (11) de réglage de l'essuyeur est articulée sur le chassis (5) de la machine, et la pièce (20) d'accouplement à course libre est articulée sur la pièce (11) de réglage de l'essuyeur.

10. Essuyeur selon la revendication 9, caractérise par le fait que la pièce (11) de réglage de l'essuyeur, et éventuellement son ressort de rappel (15), est/sont en appui par rapport au châssis (5) de la machine, et/ou la pièce (20) d'accouplement à course libre, et éventuellement son ressort de rappel (22), est/sont en appui par rapport à la pièce (11) de réglage de l'essuyeur.
